# EUROPÄISCHE PATENTSCHRIFT

(11) **EP 3 106 295 B1**
(45) Veröffentlichungstag und Bekanntmachung des Hinweises auf die Patenterteilung: **19.05.2021**
(21) Anmeldenummer: 16000654.0
(22) Anmeldetag: 17.03.2016
(51) Int. Cl.: B30B 15/06, B30B 15/02, B30B 11/02, B22F 3/03

(54) **ANORDNUNG FÜR PULVERPRESSEN**
ASSEMBLY FOR POWDER PRESSES
SYSTEME POUR PRESSES DE COMPACTAGE DE POUDRE

(30) Priorität: 17.04.2015 CH 5402015
(43) Veröffentlichungstag der Anmeldung: 21.12.2016
(73) Patentinhaber: Erowa AG, 5734 Reinach (CH)
(72) Erfinder: Hediger, Hans, CH-5734 Reinach (CH)
(74) Vertreter: Hering, Hartmut

(56) Entgegenhaltungen:
- WO-A1-02/076565
- WO-A1-2011/061686
- WO-A2-2006/021561
- CN-A- 102 407 610
- DE-A1- 4 142 352
- JP-A- H11 120 997
- US-A- 3 545 044

## Beschreibung

Die Erfindung betrifft eine Pulverpresse mit zumindest einem Unterstempel und einem Mittelstift. Pulverpressen der hier zur Rede stehenden Art verfügen neben dem genannten Unterstempel und dem Mittelstift im Allgemeinen auch über einen Oberstempel und eine dazwischen angeordnete Matrize als formgebendes Werkzeug. Der Mittelstift dient dazu, in dem Pressling -Formteil- eine Aussparung bzw. Öffnung vorzusehen.

Sollen mit einer Pulverpresse unterschiedlich gestaltete Presslinge hergestellt werden, so müssen üblicherweise der Oberstempel, die Matrize, der Unterstempel und auch der Mittelstift ausgetauscht werden. Vorzugsweise erfolgt dieser Austausch automatisiert, beispielsweise mittels eines Handhabungsgeräts in der Form eines Roboters. Während der Oberstempel, die Matrize und auch der Unterstempel für einen Robotergreifer o.ä. im allgemeinen zugänglich d.h. greifbar sind, ist ein automatisierter Austausch des Mittelstifts schwierig, da dieser üblicherweise in einer unteren bzw. der untersten Ebene angeordnet ist, die in den allermeisten Fällen für einen Robotergreifer nicht zugänglich ist, zumal sich der Mittelstift auch noch in den Unterstempel hinein erstreckt bzw. koaxial zu diesem angeordnet ist, was dessen Entnahme zusätzlich erschwert.

Da der Mittelstift in Relation zu dem Unterstempel bewegbar sein muss, können die beiden Bauteile auch nicht fest miteinander verbunden werden, um ggf. miteinander aus der Pressen entnommen bzw. ausgetauscht zu werden.

Aus der EP 2 033 722 ist eine Matrizenpressanordnung mit einem Unterstempelhalter zum Halten eines Unterstempels, einem Matrizenhalter zum Halten einer Matrize und einem Kernstiftendverbinder zum Halten eines Kernstifts bekannt. Der Unterstempel, die Matrize sowie der Kernstift sind mit je einer Bohrung zur Aufnahme eines radialen Verrieglungsstifts versehen. Zum radialen Bewegen (Betätigen) des Verrieglungsstifts ist ein Aktuator in Form eines Druckluftkolbens vorgesehen. Die Verriegelungsvorrichtung ist mit einem Endteil versehen, der zum direkten Zusammenwirken mit einem Finger eines Robotergreifers konfiguriert ist. Mittels des Verrieglungsstifts können der Unterstempel, die Matrize und der Kernstift zusammen mit den zugehörigen Haltern derart verbunden werden, dass die genannten Teile als Einheit aus der Pulverpresse entnommen werden können.

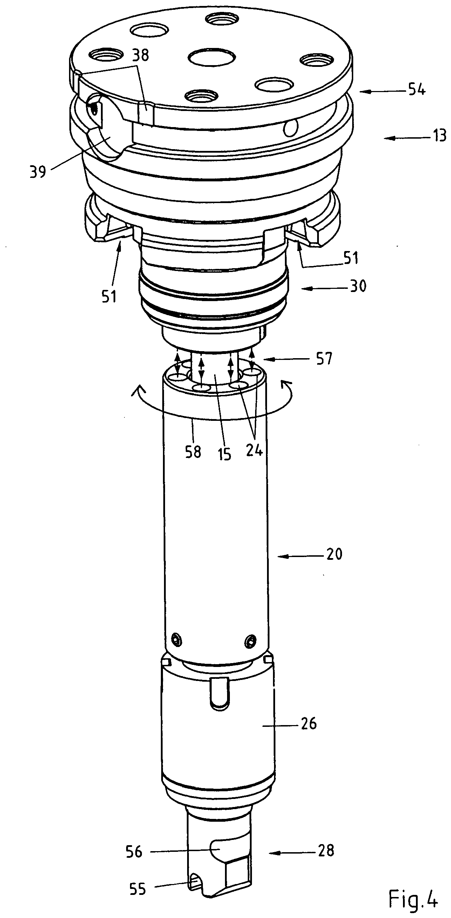

Die WO 2011 061686 offenbart eine magnetische Halterung zum Halten von metallischen Werkstücken während eines Bearbeitungsvorgangs in einem Medium. Gemäss den Fig. 4A und 4B umfasst die Halterung neben einem zentralen Permanentmagneten fünf weitere Permanentmagnete, welche in Sack-Bohrungen eingelassen und mittels Stopfen dicht verschlossen werden. Die Magnete dienen dem Halten eines Tellerrades, während der Magnet zum Halten eines Ritzels vorgesehen ist. Mittels einer solchen Halterung können die zu bearbeitenden Werkstücke in ein Medium, beispielsweise einer Gleitschleifmaschine, eingetaucht werden. Voraussetzung für das Funktionieren einer solchen Halterung ist, dass die zu haltenden Werkstücke aus einem ferromagnetischen Werkstoff bestehen.

Aus der WO 2006/021561 A2 ist eine Koaxial-Kupplung für rotierende oder oszillierende Werkzeuge bekannt, die zwei Permanentmagnete zum Fixieren der gekuppelten Kupplungsteile aufweist. Die Koaxial-Kupplung besteht aus einem Basisteil und einem Ansatzteil, wobei der Basisteil einen zylindrischen Ansatz aufweist, der in eine hohlzylindrische Aufnahme des Ansatzteils einführbar ist. Auf der Stirnfläche des Ansatzes ist ein Permanentmagnet angeordnet, der mit einem an der Aufnahme angeordneten zweiten Permanentmagneten zusammenwirkt. Auf der Aussenseite des zylindrischen Ansatzes sowie an der Innenseite der hohlzylindrische Aufnahme sind Führungsmittel vorgesehen, mit denen eine Drehbewegung beim Zusammenfügen von Basisteil und Ansatzteil erzwungen wird. Vorzugseise ist das eine der beiden Kupplungsteile als Antriebsteil und das andere als Werkzeugkopf ausgebildet.

Schliesslich ist in der CN 102 407 610 A ein Kolben offenbart, der mit einer Buchse zur Aufnahme eines Stempels versehen ist. In der Buchse ist ein Magnet zum Fixieren des Stempels an dem Kolben angeordnet.

Aufgabe der Erfindung ist es, eine dem eingangs genannten technischen Gebiet zugehörende Pulverpresse zu schaffen, welche einfach aufgebaut ist und eine automatisierte Entnahme des Mittelstifts aus der Pulverpresse wie auch ein automatisiertes Zuführen des Mittelstifts in die Pulverpresse ermöglicht.

Die Lösung der Aufgabe ist durch die Merkmale des Anspruchs 1 definiert. Gemäss der Erfindung umfasst die Pulverpresse eine Anordnung mit einer Kupplung zum direkten des Mittelstifts mit dem Unterstempel, wobei die Kupplung als Magnetkupplung ausgebildet ist und zwei Kupplungselemente aufweist, und wobei das erste Kupplungselement mit dem Mittelstift und das zweite Kupplungselement mit dem Unterstempel in Wirkverbindung steht. Diese Ausbildung erlaubt, dass einerseits eine Relativbewegung zwischen dem Mittelstift und dem Unterstempel möglich ist, zumal zum Auftrennen der Kupplung neben dem Eigengewicht des jeweiligen Elements ggf. nur die Anziehungskraft der Magnete der Magnetkupplung überwunden werden muss. Andererseits ermöglicht die Magnetkupplung jedoch, dass durch die Anziehungskraft des Magnets oder der Magnete der Unterstempel zusammen mit dem Mittelstift entfernt werden kann/können. Es versteht sich, dass die Magnete, namentlich deren Anzahl, Positionierung und Anziehungskraft, den Anforderungen entsprechend gewählt werden.

Bei einer bevorzugten Weiterbildung umfasst die Anordnung eine den Unterstempel tragende Palette, wobei das zweite Kupplungselement mit der den Unterstempel tragenden Palette verbunden ist. Diese Ausbildung ermöglicht ein schnelles Entfernen oder indirekten Koppeln des Mittelstifts mit dem Unterstempel, wobei die Kupplung als Magnetkupplung ausgebildet ist und zwei Kupplungselemente aufweist, und wobei das erste Kupplungselement mit dem Mittelstift und das zweite Kupplungselement mit dem Unterstempel in Wirkverbindung steht. Diese Ausbildung erlaubt, dass einerseits eine Relativbewegung zwischen dem Mittelstift und dem Unterstempel möglich ist, zumal zum Auftrennen der Kupplung neben dem Eigengewicht des jeweiligen Elements ggf. nur die Anziehungskraft der Magnete der Magnetkupplung überwunden werden muss. Andererseits ermöglicht die Magnetkupplung jedoch, dass durch die Anziehungskraft des Magnets oder der Magnete der Unterstempel zusammen mit dem Mittelstift entfernt werden kann/können. Es versteht sich, dass die Magnete, namentlich deren Anzahl, Positionierung und Anziehungskraft, den Anforderungen entsprechend gewählt werden.

Bei einer bevorzugten Weiterbildung umfasst die Pulverpresse eine den Unterstempel tragende Palette, wobei das zweite Kupplungselement mit der den Unterstempel tragenden Palette verbunden ist. Diese Ausbildung ermöglicht ein schnelles Entfernen des Unterstempels zusammen mit dem Mittelstift und ein wiederholbar genaues Einsetzen des Unterstempels und des Mittelstifts in die Pulverpresse

Vorzugsweise umfasst die Magnetkupplung zumindest einen am einen Kupplungselement angeordneten Permanentmagneten und zumindest einen am anderen Kupplungselement angeordneten Permanentmagneten oder ferromagnetischen Werkstoff. Permanentmagnete sind kostengünstig, erfordern keinen Unterhalt und sind in unterschiedlichsten Ausführungsformen erhältlich.

Besonders bevorzugt umfasst die Magnetkupplung mehrere an jedem Kupplungselement angeordnete Permanentmagnete. Dadurch kann eine symmetrische Bauweise erreicht werden, und die Anziehungskraft der Magnete kann den Anforderungen entsprechend variiert werden.

Bei einer weiteren besonders bevorzugten Weiterbildung ist die Magnetkupplung derart ausgebildet, dass durch den Permanentmagneten bzw. die Permanentmagnete beim Koppeln der beiden Kupplungselemente eine winkelgenaue Positionierung des ersten Kupplungselements gegenüber dem zweiten Kupplungselement bewirkt wird. Auf diese Weise wird der Mittelstift beim Ankoppeln an den Unterstempel bzw. die Palette winkelgerecht positioniert.

Eine weitere bevorzugte Weiterbildung sieht vor, dass das erste Kupplungselement mit einer dem zweiten Kupplungselement zugewandten Stirnseite versehen ist, in welche zumindest ein Permanentmagnet oder ein ferromagnetischer Werkstoff zur Bildung der einen Kupplungshälfte der Magnetkupplung eingelassen ist. Eine solche Ausbildung ist einfach und kostengünstig zu realisieren.

Bei einer weiteren bevorzugten Weiterbildung weist das zweite Kupplungselement eine dem ersten Kupplungselement zugewandte Stirnseite auf, in welche zumindest ein Permanentmagnet oder ein ferromagnetischer Werkstoff zur Bildung der anderen Kupplungshälfte der Magnetkupplung eingelassen ist. Auf diese Weise können die Stirnseiten zusammen mit dem Magneten bzw. den Magneten einfach und kostengünstig aufeinander abgestimmt werden und der jeweilige Magnet kann seine optimale Wirkung in Bezug auf das in der gegenüberliegenden Stirnseite angeordnete Gegenstück (Magnet oder ferromagnetischer Werkstoff) entfalten.

Vorzugsweise sind in die Stirnseite des jeweiligen Kupplungselements mehrere Permanentmagnete eingelassen, wobei das eine Kupplungselement Permanentmagnete mit unterschiedlich ausgerichteten Polen aufweist, welche derart auf die ebenfalls unterschiedlich ausgerichtete Pole aufweisenden Permanentmagnete des anderen Kupplungselements abgestimmt sind, dass das erste Kupplungselement unter der Wirkung der Feldlinien der Magnete selbsttätig in eine vorbestimmte Winkellage gegenüber dem zweiten Kupplungselement drehbar ist. Diese Ausbildung hat sich als besonders günstig im Hinblick auf ein winkelgerechtes Ausrichten des ersten gegenüber dem zweiten Kupplungselement erwiesen, zumal sich das eine gegenüber dem anderen Kupplungselement um einen vergleichsweise grossen Winkel verdrehen kann.

Bei einer weiteren bevorzugten Weiterbildung ist das erste Kupplungselement in der Form einer den Mittelstift abschnittweise umschliessenden Hülse ausgebildet und das zweite Kupplungselement ist mit einer zentralen Bohrung zum Durchführen des Mittelstifts versehen. Eine solche Hülse erlaubt einerseits ein einfaches und schnelles Befestigen derselben an dem Mittelstift. Zudem werden bei dieser Ausbildung die beiden Kupplungselemente durch den Mittelstift koaxial zueinander ausgerichtet.

Besonders bevorzugt sind das erste und zweite Kupplungselement zur Hauptsache aus einem nichtmagnetischen Werkstoff gefertigt. Dadurch kann eine Beeinflussung des Permanentmagnets bzw. der Permanentmagente verhindert werden.

Eine weitere bevorzugte Weiterbildung sieht vor, dass die Magnetkupplung zusätzlich mechanische Mittel zum Ausrichten des ersten Kupplungselements gegenüber dem zweiten Kupplungselement umfasst. Diese Ausbildung erlaubt eine Ausrichtung des einen gegenüber dem anderen Kupplungselement durch mechanische Mittel.

Eine bevorzugte Weiterbildung sieht vor, dass das zweite Kupplungselement mit radialen Fortsätzen versehen ist, mittels welchen sie winkelgerecht in Ausnehmungen der Palette zum Fixieren des Unterstempels positionierbar ist. Dadurch können die zumeist vorhandenen Ausnehmungen in der Palette, insbesondere die Zentriernuten, für eine winkelgerechte Positionierung des zweiten Kupplungselements in Bezug auf die Palette genutzt werden. Sofern die Palette positionsdefiniert erfasst wird, beispielsweise von einem Robotergreifer, ist gleichzeitig auch die Winkelstellung des zweiten Kupplungselements definiert.

Eine weitere bevorzugte Weiterbildung sieht vor, dass das zweite Kupplungselement federerlastisch nachgiebige Zungen aufweist, welche mit Rastnasen versehen sind, so dass das zweite Kupplungselement klemmend in einer korrespondierenden Ringnut der Palette fixierbar ist. Diese Ausbildung ermöglicht ein schnelles und einfaches Befestigen des zweiten Kupplungselements an der Palette. Sofern der Mittelstift mit einer zentralen Bohrung versehen ist, wie dies vorgängig erläutert wurde, können durch Einführung des Mittelstifts in die zentrale Bohrung die federerlastischen Zungen nicht mehr radial zurück bewegt werden. Vorzugsweise ist der Mittelstift derart auf die Bohrung bzw. die federerlastischen Zungen abgestimmt, dass letztere radial nach aussen gedrückt werden, so dass eine formschlüssige Verbindung mit der Palette des Unterstempels entsteht.

Schliesslich sieht eine besonders bevorzugte Weiterbildung vor, dass die Palette mit zumindest einer Ausnehmung und/oder Erhebung versehen ist, welche derart ausgebildet ist/sind, dass ein Robotergreifer daran angreifen kann. Dadurch wird eine automatisierte Entnahme der Palette zusammen mit dem Unterstempel und dem Mittelstift aus der Pulverpresse bzw. ein Zuführen der genannten Elemente in die Pulverpresse besonders begünstigt.

Nachfolgend wird ein bevorzugtes Ausführungsbeispiel der Erfindung anhand von Zeichnungen näher erläutert. Dabei zeigt:
- Fig. 1: eine perspektivische Ansicht einer schematisch dargestellten Pulverpresse zusammen mit einer Anordnung zum Koppeln des Mittelstifts mit dem Unterstempel;
- Fig. 2: Elemente der Anordnung zusammen mit weiteren Bauteilen in einer perspektivischen Ansicht;
- Fig. 3: einen Schnitt durch die Anordnung zum Koppeln des Mittelstifts mit dem Unterstempel zusammen mit dem Mittelstift und einer Palette;
- Fig. 4: eine perspektivische Ansicht der Anordnung zum Koppeln des Mittelstifts mit dem Unterstempel;
- Fig. 5: die Pulverpresse gemäss Fig. 1 zusammen mit einem die Anordnung haltenden Robotergreifer;
- Fig. 6: den Robotergreifer gemäss Fig. 1 in einer anderen Position.

Grundsätzlich sind in den Figuren gleiche Teile mit gleichen Bezugszeichen versehen.

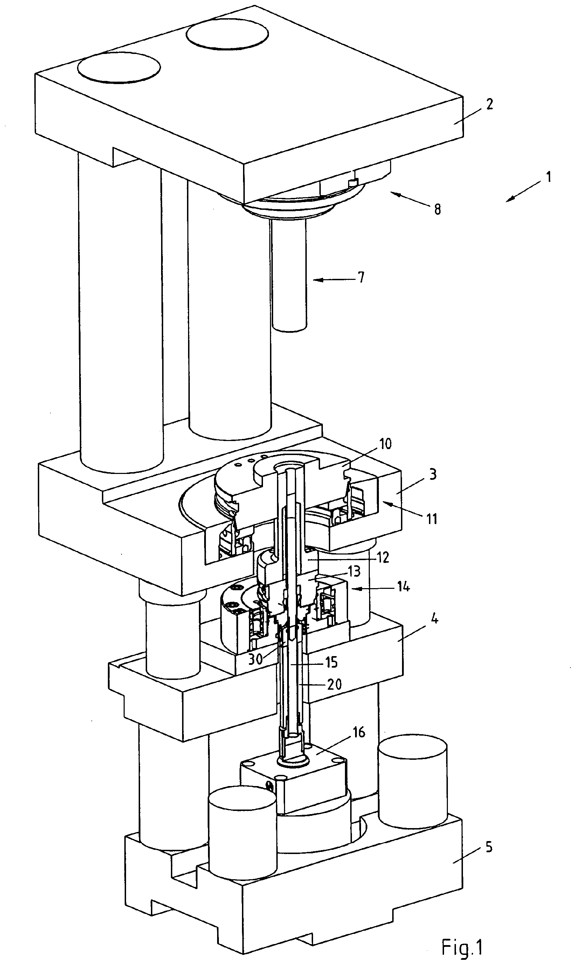

Die Figur 1 zeigt eine perspektivische Ansicht einer schematisch dargestellten Pulverpresse zusammen mit einer Anordnung zum Koppeln des Mittelstifts mit dem Unterstempel bzw. einer den Unterstempel tragenden Palette in teilweise geschnittener Darstellung. Da gattungsgemässe Pulverpressen grundsätzlich bekannt sind, wird nachfolgend insbesondere nur auf deren wichtigste Bestandteile oder auf einige im Zusammenhang mit der Erfindung relevanten Elemente eingegangen.

Von oben nach unten weist die Pulverpresse 1 eine Oberplatte 2, eine Matrizenplatte 3, eine Unterplatte 4 sowie eine Fussplatte 5 auf. Die Platten sind mittels eines nicht näher bezeichneten Pressenrahmens miteinander verbunden. Üblicherweise ist eine der genannten Platten fest mit dem Pressenrahmen verbunden und nicht verfahrbar, beispielsweise die Matrizenplatte 3, während die anderen Platten vertikal beweglich sind.

An der Oberplatte 2 ist ein Oberstempel 7 mittels eines ersten Spannfutters "Oberstempel-Spannfutter 8" und an der Matrizenplatte 3 eine Matrize 10 mittels eines zweiten Spannfutters "Matrizen-Spannfutter 11" fixiert. An der Unterplatte 4 ist ein Unterstempel 12 mittels eines dritten Spannfutters "Unterstempel-Spannfutter 14" fixiert, während schliesslich an der Fussplatte 5 ein Mittelstift 15 mittels eines vierten Spannfutters "Mittelstift-Spannfutter 16" fixiert ist. Vorzugsweise wird der Unterstempel 12 auch zum Ausstoßen des Presslings aus der Matrize 10 genutzt. Mittels den genannten Spannfuttern kann das jeweils zugehörige Element positionsgenau an der jeweiligen Platte fixiert und im Bedarfsfall auch wieder entfernt werden. Üblicherweise werden der Oberstempel 7 und der Unterstempel 12 an einer Palette (Werkzeugträger) befestigt, welche mit Positionierelementen beispielsweise in der Form von Nuten versehen ist. Die jeweilige Palette kann dann positionsgenau in dem zugehörigen Spannfutter festgespannt werden. Die Anordnung zum Koppeln des Mittelstifts 15 mit dem Unterstempel 12 umfasst eine Kupplung mit zwei Kupplungselementen 20, 30, wobei das erste Kupplungselement 20 mit dem Mittelstift 15 und das zweite Kupplungselement 30 mit einer den Unterstempel 12 tragenden Palette 13 verbunden wird, wie nachfolgend noch detailliert erläutert wird. Somit steht das erste Kupplungselement 20 mit dem Mittelstift 15 und das zweite Kupplungselement 30 mit dem Unterstempel 12 in Wirkverbindung. Um den Mittelstift 15 an den Unterstempel 12 bzw. die Palette 13 ankoppeln zu können, ist die Kupplung als Magnetkupplung ausgebildet, die mehrere Permanentmagnete umfasst. Die Ausbildung und Wirkungsweise der Magnetkupplung wird anschliessend noch näher erläutert.

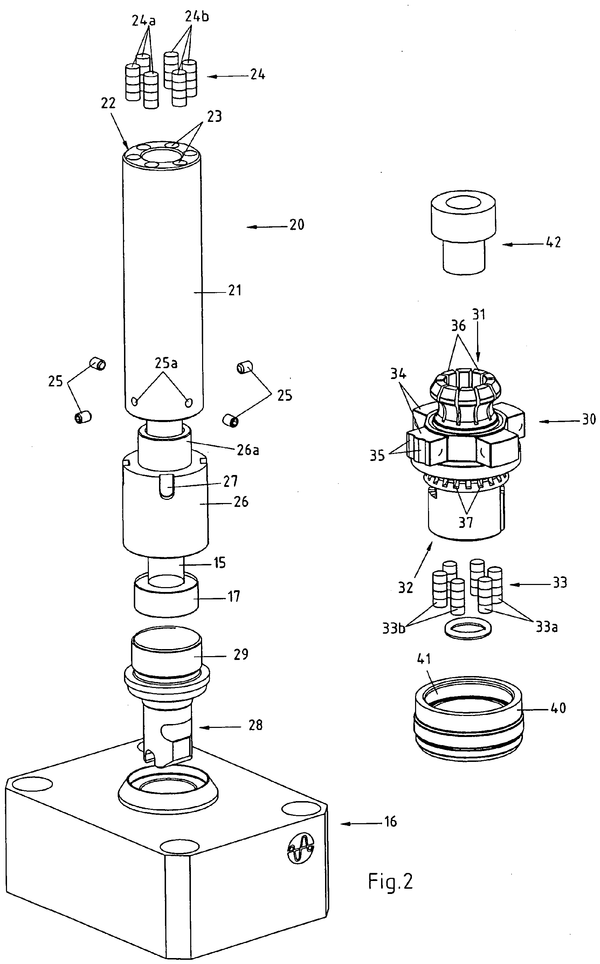

Die Fig. 2 zeigt mittels einer Explosionsdarstellung in perspektivischer Ansicht die beiden Kupplungselemente 20, 30 zusammen mit dem Unterteil des Mittelstifts 15, dem vierten Spannfutter 16 zum Festspannen des Mittelstifts 15 sowie weiteren Elementen.

Neben den beiden Kupplungselementen 20, 30 ist zudem ein an der Unterseite des Mittelstifts 15 angeordneter zylindrischer Fortsatz 17, ein Spannzapfen 28 mit einem zylindrischen Oberteil 29 mit Aussengewinde, ein Dichtelement 42 sowie ein Ringelement 40 ersichtlich.

Das erste Kupplungselement 20 umfasst eine Hülse 21, welche mittels der vorgängig genannten Palette mit dem Mittelstift 15 verbunden wird. Die Hülse 21 umschliesst den Mittelstift 15 koaxial und ist aus einem nichtmagnetischen Werkstoff wie beispielsweise Aluminium oder Kunststoff gefertigt. Das erste Kupplungselement 20 weist oben und unten ringförmige Stirnflächen auf, wobei in die obere Stirnfläche 22 sechs Bohrungen 23 zur Aufnahme von sechs Permanentmagneten 24 eingelassen sind. Die sechs Magnete 24 werden derart in die Bohrungen 23 eingesetzt, dass jeweils drei nebeneinander liegende Magnete 24a bzw. 24b gleiche Polung besitzen, wobei von jeweils drei Magneten 24a der Nordpol nach oben gerichtet ist, während von den drei weiteren Magneten 24b jeweils der Südpol nach oben gerichtet ist.

Das erste Kupplungselement 20 umfasst zudem eine Befestigungsmutter 26, welche mit schlitzartigen Ausnehmungen 27 versehen ist, an welchen ein Befestigungswerkzeug -Hakenschlüssel- zum Anziehen der Befestigungsmutter 26 angesetzt werden kann. In die Hülse 21 sind Gewindebohrungen 25a zum Einschrauben von Gewindestiften 25 eingelassen, mittels welchen die Hülse 20 an einem oberen, zylindrischen Kragen 26a der Befestigungsmutter 26 fixiert werden kann. Die Befestigungsmutter 26 mitsamt dem Kragen 26a ist aus einem Stück gefertigt. Die Befestigungsmutter 26 ihrerseits wird mittels eines Innengewindes (nicht ersichtlich) auf das Aussengewinde des zylindrischen Oberteils 29 des Spannzapfens 28 aufgeschraubt. Zusätzlich dient die Befestigungsmutter 26 auch dem Verbinden des Spannzapfens 28 mit dem Mittelstift 15, indem die Befestigungsmutter 26 mit einem inneren Absatz (nicht ersichtlich) an der oberen Stirnfläche des zylindrischen Fortsatzes 17 des Mittelstifts 15 angreift und diesen gegen die plane Oberfläche des zylindrischen Oberteils 29 des Spannzapfens 28 drückt.

Der Spannzapfen 28 ist auf seiner Unterseite mit Ausnehmungen zum Positionieren und Fixieren an dem Spannfutter 16 versehen. Da derartige Spannzapfen 28 grundsätzlich bekannt sind, wird an dieser Stelle nicht näher darauf eingegangen.

Das zweite Kupplungselement 30 ist ebenfalls aus einem nichtmagnetischen Werkstoff, vorzugsweise Kunststoff gefertigt und mit einer zentralen Durchgangsbohrung 31 versehen. Der Durchmesser der zentralen Durchgangsbohrung 31 ist derart auf den Aussendurchmesser des Mittelstifts 15 abgestimmt, dass der Mittelstift 15 mit geringem Spiel von dem ersten Kupplungselement 30 umfasst wird, sich aber in der Bohrung 31 drehen kann. Das zweite Kupplungselement 30 wird somit ebenfalls koaxial zum Mittelstift 15 angeordnet. Auf der Unterseite, welche im befestigten Zustand dem ersten Kupplungselement 20 zugewandt ist, ist das zweite Kupplungselement 30 mit einer planen Stirnfläche 32 versehen, in welche wiederum sechs Bohrungen (nicht ersichtlich) zur Aufnahme von sechs Permanentmagneten 33 eingelassen sind. Hierbei werden die sechs Magnete 33 wiederum derart in die Bohrungen eingesetzt, dass jeweils drei nebeneinander liegende Magnete 33a bzw. 33b gleiche Polung besitzen, wobei von jeweils drei Magneten 33a der Nordpol nach oben gerichtet ist, während von den drei weiteren Magneten 33b jeweils der Südpol nach oben gerichtet ist.

Das zweite Kupplungselement 30 ist im oberen Bereich mit vier radialen Fortsätzen 34 versehen, die der Positionierung des Kupplungselements an der Unterseite der Palette dienen, wie nachfolgend noch erläutert wird. In den einen dieser Fortsätze 34 sind Einkerbungen 35 eingelassen. Diese Einkerbungen 35 stellen eine optische Orientierungshilfe dar, um das zweite Kupplungselement 30 winkelgerecht an der Palette zu positionieren. Die Positionierung und Ausrichtung der Magnete 33a bzw. 33b wird vorzugsweise auf die Einkerbungen 35 abgestimmt.

Auf der Oberseite ist das zweite Kupplungselement 30 mit federelastischen Zungen 36 im Sinne einer Spannhülse versehen, wobei die federelastischen Zungen 36 Rastnasen aufweisen, mittels welchen das zweite Kupplungselement 30 in einer Bohrung bzw. einer in die Bohrung eingelassenen Ringnut der Palette fixierbar ist. Unterhalb der Fortsätze 34 ist das zweite Kupplungselement 30 mit radialen Schlitzen 37 versehen, welche von der Durchgangsbohrung 31 nach aussen führen. Des Weiteren ist ein Ringelement 40 erkennbar, welches von unten auf das zweite Kupplungselement 30 aufgeschoben werden kann. Auf der Innenseite besitzt das Ringelement 40 eine umlaufende Kammer in der Form einer Ringnut 41, die der Aufnahme von Pulverpartikeln dient, welche über die radialen Schlitze 37 des zweiten Kupplungselements 30 austreten können. Schliesslich ist noch ein Dichtelement 42 ersichtlich, welches von der Oberseite her in die Durchgangsbohrung 31 des zweiten Kupplungselements 30 eingeführt wird. Allfällige weitere Dichtungen und O-Ringe zum Abdichten und ggf. Fixieren des zweiten Kupplungselements 30 sowie des Ringelements 40 sind nicht dargestellt.

Die Anordnung und Polung der Permanentmagnete 24a, 24b des ersten Kupplungselements 20 ist jedenfalls derart auf die Anordnung und Polung der Permanentmagnete 33a, 33b des zweiten Kupplungselements 30 abgestimmt, dass das zweite Kupplungselement 30 im angekoppelten Zustand eine definierte Winkelstellung gegenüber dem ersten Kupplungselement 20 einnimmt.

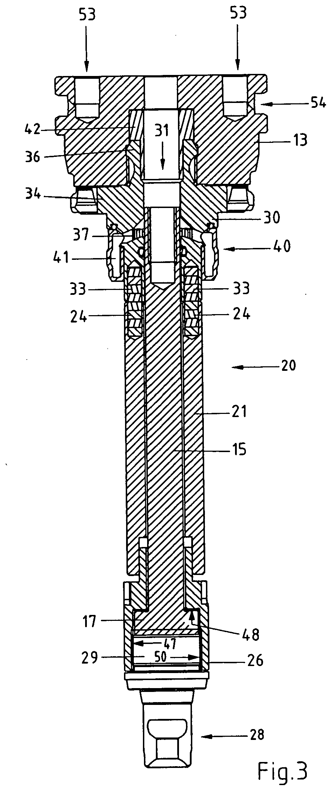

Die Fig. 3 zeigt einen Schnitt durch die Anordnung zum Koppeln des Mittelstifts 15 mit dem Unterstempel bzw. der Palette 13. Der auf der Oberseite der Palette 13 zu befestigende Unterstempel ist in dieser Darstellung nicht eingezeichnet. Zum Befestigen des Unterstempels weist die Palette 13 Gewindebohrungen 53 auf, welche in die plane Oberseite der Palette 13 eingelassen sind.

Das zweite Kupplungselement 30 ist an der Palette 13 fixiert, indem die Rastnasen der federelastischen Zungen 36 in eine innen umlaufende Ringnut der Palette 13 eingreifen. Das erste Kupplungselement 20 ist mittels der Anziehungskraft der Magnete 24, 33 mit dem zweiten Kupplungselement 30 gekoppelt. Die Magnete 24, 33 sind derart dimensioniert, dass deren Anziehungskraft ausreicht, damit das erste Kupplungselement 20 zusammen mit den weiteren Elementen wie insbesondere dem Mittelstift 15 gehalten -getragen- wird und auch sicher transportiert werden kann.

In dieser Darstellung ist zudem das Dichtelement 42 erkennbar, welches das zweite Kupplungselement 30 nach oben hin derart abdichtet, dass allfällige Verunreinigungen, insbesondere Pulverpartikel, nicht radial entweichen können, sondern nur nach unten in Richtung der Durchgangsbohrung 31 des zweiten Kupplungselements 30 fallen können.

Unterhalb der radialen Fortsätze 34 ist das zweite Kupplungselement 30 mit radialen Schlitzen 37 versehen, welche von der Durchgangsbohrung 31 nach aussen führen. Des Weiteren ist das Ringelement 40 ersichtlich, welches von unten auf das zweite Kupplungselement 30 aufgeschoben ist. Zudem ist die im Ringelement 40 umlaufende Ringkammer 41 erkennbar, die insbesondere der Aufnahme von Pulverpartikeln dient, welche über die radialen Schlitze 37 des zweiten Kupplungselements 30 austreten können.

Sofern der Mittelstift 15 mit einem Oberteil versehen ist (nicht dargestellt), kann das zweite Kupplungselement 30 nicht mehr von der Palette 13 entfernt werden, da sich der genannte Oberteil des Mittelstifts 15 durch die Durchgangsbohrung des zweiten Kupplungselements 30 erstreckt und die federelastischen Zungen 36 nicht mehr nach innen ausweichen können. Vorzugsweise ist der Oberteil des Mittelstifts 15 derart auf die Bohrung 31 bzw. die federerlastischen Zungen 36 abgestimmt, dass letztere radial nach aussen gedrückt werden, so dass eine formschlüssige Verbindung mit der Palette 13 des Unterstempels entsteht.

Die Befestigungsmutter 26 ist mittels des Innengewindes 47 auf das Aussengewinde 50 des zylindrischen Oberteils 29 des Spannzapfens 28 aufgeschraubt, wobei der Spannzapfen 28 nicht in geschnittenem Zustand dargestellt ist. Die Befestigungsmutter 26 verbindet gleichzeitig den Spannzapfen 28 mit dem Mittelstift 15, indem diese mittels einer inneren Schulter 48 den zylindrischen Fortsatz 17 des Mittelstifts 15 gegen die plane Oberfläche des zylindrischen Oberteils 29 des Spannzapfens 28 drückt. Die Hülse 21 des ersten Kupplungselements 20 ist mittels den Gewindestiften 25 (Fig. 2) mit der Befestigungsmutter 26 und damit auch mit dem Mittelstift 15 verbunden.

Durch die federelastischen Zungen 36 kann das zweite Kupplungselement 30 einfach und schnell an der Palette 13 fixiert und nach dem Ausfahren des Mittelstifts auch wieder entfernt werden.

Die Fig. 4 zeigt eine perspektivische Ansicht der Anordnung zum Koppeln des Mittelstifts 15 mit dem Unterstempel zusammen mit der Palette 13 zur Aufnahme des Unterstempels. Von dem Mittelstift 15 selber ist nur ein kleiner Abschnitt zwischen den beiden Kupplungselementen 20, 30 ersichtlich. Die Anordnung und Ausrichtung der Permanentmagnete 24 des ersten Kupplungselements 20 zu den Permanentmagneten (nicht ersichtlich) des zweiten Kupplungselements 30 ist so gewählt, dass die beiden Kupplungselemente 20, 30 durch die Anziehungskraft der ungleichnamigen Pole bzw. die Abstosskraft der gleichnamigen Pole in einer vorbestimmten Position miteinander gekoppelt werden, so dass der Mittelstift 15 bzw. dessen Spannzapfen 28 nach dem Ankoppeln des ersten Kupplungselements 20 an das zweite Kupplungselement 30 eine vorgegebene Winkelstellung in Relation zu der Palette 13 einnimmt. Die Feldlinien - Wirkungslinien- der Magnete sind durch Doppelpfeile 57 schematisch angedeutet. Jedenfalls sind die Magnete derart angeordnet und dimensioniert, dass das erste Kupplungselement 20 in Relation zum zweiten Kupplungselement 30 unter der Wirkung der Magnete eine Drehbewegung in die eine oder andere Richtung ausführen kann, so dass das erste Kupplungselement 20 beim Befestigen am zweiten Kupplungselement 30 nur grob vorpositioniert werden muss, um sich danach unter der Wirkung der Magnete in eine vorgegebene Winkelstellung gegenüber dem zweiten Kupplungselement 30 zu drehen. Je nach Anzahl, Anordnung und Stärke der Magnete variiert der Winkel, um den sich das eine Kupplungselement beim Befestigen am anderen Kupplungselement selbsttätig drehen kann. Vorzugsweise sollte eine selbsttätige Ausrichtung um zumindest einige Winkelgrad immer möglich sein.

Wenn sich die beiden Kupplungselemente 20, 30 einander annähern und das erste Kupplungselement 20 in einer vorpositionierten Stellung "losgelassen" wird, dreht sich das erste Kupplungselement 20 unter der Wirkung der Feldlinien der Magnete in Relation zum zweiten Kupplungselement 30 selbsttätig in eine vorbestimmte Winkellage. Dazu ist jedenfalls der Mittelstift 15 drehbar in der Durchgangsbohrung des zweiten Kupplungselements 30 aufgenommen.

Da der Robotergreifer die Palette 13 in einer definierten Position erfasst, ist nach dem Ankoppeln des ersten Kupplungselements 20 auch die Ausrichtung des Spannzapfens 28, namentlich dessen Ausnehmungen 55, 56 bekannt, was wichtig ist, damit der Mittelstift 15 automatisiert, insbesondere vollautomatisch in dem Mittelstift-Spannfutter festgespannt werden kann. Durch einen weiteren Doppelpfeil 58 ist die Drehausrichtung des ersten Kupplungselements 20 beim Ankoppeln an das zweite Kupplungselement 30 angedeutet. Nach dem Ankoppeln ist natürlich auch die Winkelstellung des Oberteils des Mittelstifts 15 in Bezug auf die Palette 13 definiert, was insbesondere dann wichtig sein kann, wenn dessen oberes, in den Pressling einzuführendes Ende nicht symmetrisch ist. Die Palette 13 ist auf der Unterseite mit Zentriernuten 51 versehen, mittels welchen sie beim Festspannen am Spannfutter in X- und Y-Richtung wie auch bezüglich der Winkellage um die Z-Achse hochpräzise ausgerichtet wird. Die Palette weist zudem Referenzmarken 38 auf, mittels welchen deren Winkellage erkennbar und eine eindeutige Positionierung in Bezug auf das Spannfutter ermöglicht wird, zumal die Palette durch die 4 Nuten bezüglich des Spannfutters in 90° Schritten gedreht werden kann. Die Referenzmarken 38 können auch zur Positionierung des zweiten Kupplungselements 30 herangezogen werden, beispielsweise indem die an einem radialen Fortsatz 34 des zweiten Kupplungselements 30 angebrachten Einkerbungen 35 (Fig. 2) auf die Referenzmarken 38 ausgerichtet werden. Zudem weist die Palette 13 eine Ausnehmung 39 auf, welche der Aufnahme eines Speichermediums (Chip) dient. Auf dem Speichermedium können beispielsweise Angaben zu dem Unterstempel und/oder Mittelstift abgespeichert werden.

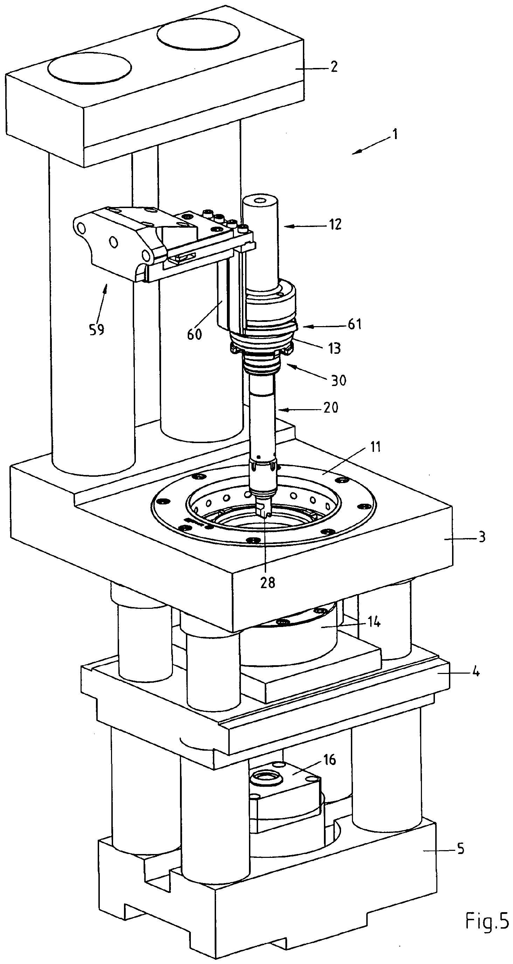

Die Fig. 5 zeigt die Pulverpresse 1 gemäss Fig. 1 zusammen mit einem schematisch dargestellten Robotergreifer 59, wobei von der Oberplatte 2 der Pulverpresse 1 nur der hintere Teil dargestellt ist. Um den Unterstempel 12 zusammen mit dem Mittelstift (nicht erkennbar) in die Pulverpresse 1 einzusetzen bzw. daraus zu entnehmen, greift der Robotergreifer 59 wie dargestellt an der Palette 13 an. Wie vorgängig erläutert, ist der Mittelstift durch die beiden Kupplungselemente 20, 30, namentlich unter der Wirkung der Magnete der Magnetkupplung, mit der Palette 13 und dem Unterstempel 12 verbunden, so dass der Mittelstift durch den an der Palette 13 angreifenden Robotergreifer 59 aus der Pulverpresse 1 entnommen und auch wieder darin eingesetzt werden kann. Der Robotergreifer 59 weist vorzugsweise ein nach unten abgesetztes Winkelelement 60 auf, an dessen unterem Ende ein mit zwei Fingern 61 versehener Fingergreifer angeordnet ist. Die Finger 61 greifen dabei definiert in die Nut der Palette 13 ein. Die Finger 61 des Robotergreifers 59 können durch das Matrizen-Spannfutter 11 hindurch nach unten bis ca. auf die Höhe des Unterstempel-Spannfutters 14 gefahren werden. In dem an der Fussplatte 5 angeordneten Mittelstift-Spannfutter 16 kann dann der Mittelstift mittels des Spannzapfens 28 festgespannt werden. Da der Robotergreifer 59 die Palette 13 positionsdefiniert erfasst, ist die Ausrichtung des Spannzapfens 28 mitsamt dessen Ausnehmungen in Bezug auf die Palette 13 sowie der entsprechenden Positions- und Spannelemente des Mittelstift-Spannfutters 16 bekannt.

Beim Einsetzen des Mittelstifts in die Pulverpresse 1 fährt der Robotergreifer 59 soweit nach unten, dass der Spannzapfen 28 des Mittelstifts in das Mittelstift-Spannfutter 16 eindringt und der Spannzapfen 28 in dem Mittelstift-Spannfutter 16 festgespannt werden kann. Es versteht sich, dass dazu das Unterstempel-Spannfutter 14 in Relation zum Mittelstift-Spannfutter 16 soweit abgesenkt sein muss, dass dies ermöglicht wird. Zudem muss ein genügend grosser vertikaler Abstand zwischen der Matrizenplatte 3 und der Oberplatte 2 bestehen, damit der Unterstempel 12 zusammen mit dem Mittelstift von der Seite her in die Pulverpresse 1 eingefahren und die jeweiligen Bauteile in dem zugehörigen Spannfutter 14, 16 festgespannt werden können. Der notwendige vertikale Abstand zwischen der Matrizenplatte 3 und der Oberplatte 2 kann durch Anheben der Oberplatte 2 und/oder Absenken der Matrizenplatte 3 erfolgen.

Nachdem der Unterstempel 12 zusammen mit dem Mittelstift in die Pulverpresse 1 eingefahren und abgesenkt wurde, wird entweder zuerst die Palette 13 in dem Unterstempel-Spannfutter 14 oder der Mittelstift in dem Mittelstift-Spannfutter 14 festgespannt. Üblicherweise ist die Reihenfolge wählbar. Nach dem Festspannen der Palette 13 in dem Unterstempel-Spannfutter 14 kann jedenfalls der Robotergreifer 59 ausgefahren werden. Sobald neben der Palette 13 auch der Mittelstift 15 in dem zugehörigen Spannfutter 16 festgespannt ist, ist der Unterstempel 12 zusammen mit dem Mittelstift 15 bereit für einen Pressvorgang. Der Pressvorgang selber kann gestartet werden, sobald zusätzlich die Matrize und der Oberstempel eingesetzt sind und die entsprechenden Parameter der Presse der verwendeten Werkzeug-Kombination angepasst sind. Allenfalls müssen noch nachgelagerte Prozesse wie z.B. angebaute Wägesysteme, Kamerasysteme etc. auf die neuen Prozessparameter angepasst werden. Um die Palette 13 zusammen mit dem Unterstempel 12 und dem Mittelstift wieder aus der Pulverpresse zu entnehmen, wird eine umgekehrte Reihenfolge gewählt.

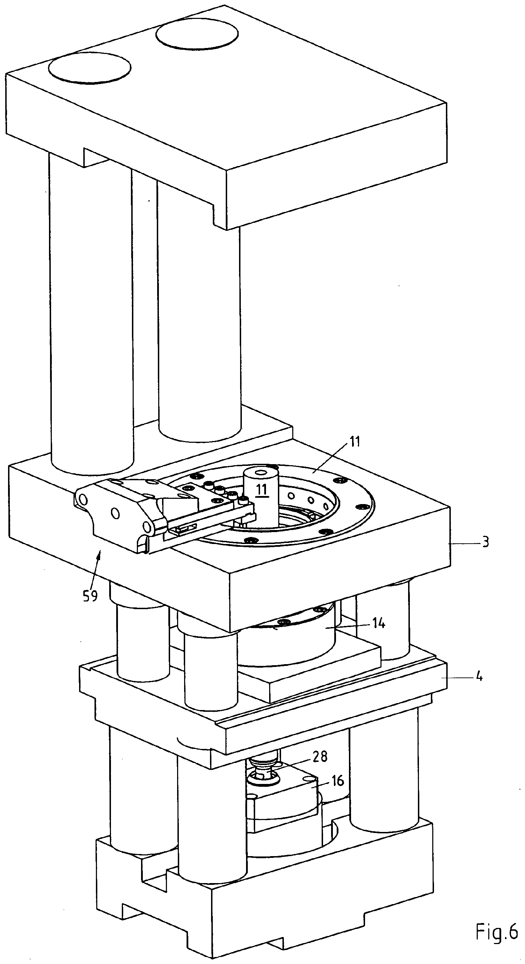

Die Fig. 6 zeigt den Robotergreifer 59 in einer abgesenkten Stellung, in der der Spannzapfen 28 des Mittelstifts in das Mittelstift-Spannfutter 14 eingeführt wird. Die Palette 13 kann bereits in dem Unterstempel-Spannfutter 14 festgespannt sein oder es wird zuerst der Mittelstift in dem Mittelstift-Spannfutter 14 und erst danach die Palette 13 festgespannt.

Sobald die den Unterstempel tragende Palette und der Mittelstift in dem jeweiligen Spannfutter 14, 16 festgespannt sind, kann der Mittelstift in Relation zu dem Unterstempel 12 in vertikaler Richtung bewegt. Dazu muss neben den ohnehin zu überwindenden Kräften natürlich auch die Anziehungskraft der Magnete überwunden werden.

Die Vorteile einer erfindungsgemäss gestalteten Anordnung lassen sich wie folgt zusammenfassen:
- Kostengünstige Lösung zum automatisierten Zuführen eines Mittelstifts in eine Pulverpresse bzw. zur automatisierten Entnahme daraus.
- Einfach realisierbare Lösung ohne aufwendige Mechanik;
- Universell einsetzbar da weitgehend unabhängig von der Dimension der Pulverpresse wie auch des Unterstempels und des Mittelstifts;
- Bestehende Pulverpressen sind ggf. nachrüstbar;
- Einfaches und schnelles Ausrichten des Mittelstifts auf das zugehörige Spannfutter;
- Der Mittelstift kann schnell und einfach von dem Unterstempel bzw. der den Unterstempel tragenden Palette getrennt werden;
- Die Anordnung kann den Anforderungen entsprechend dimensioniert werden, so dass unterschiedliche Mittelstifte mit zugehörigen Unterstempeln kombiniert werden können;
- Der Mittelstift kann unabhängig von dem Unterstempel aufbewahrt und eingesetzt werden;
- Die Anordnung weist keine beweglichen Teile auf;
- Es ist keine Energieversorgung der Anordnung nötig.

Es versteht sich, dass das vorgängig anhand der Zeichnungen erläuterte Zeilennummern Ausführungsbeispiel keinesfalls als abschliessend zu betrachten ist, sondern dass im Rahmen des in den Patentansprüchen definierten Schutzumfangs durchaus von dem erläuterten Ausführungsbeispiel abweichende Gestaltungen möglich sind. So könnte beispielsweise das erste Kupplungselement eine Hülse umfassen, welche direkt mit dem Mittelstift verbunden wird. Auch das zweite Kupplungselement könnte ggf. direkt mit dem Unterstempel verbunden werden. Auch die Ausbildung der Magnetkupplung kann durchaus vom gezeigten Beispiel abweichen. So kann beispielsweise die Anzahl und Anordnung der Magnete variiert werden. Wichtig ist lediglich, dass die Magnetkupplung zumindest einen Magneten, vorzugsweise mehrere Permanentmagnete aufweist, der/die ein direktes oder indirektes Koppeln des Mittelstifts mit dem Unterstempel ermöglicht bzw. ermöglichen. Natürlich können beispielsweise auch kreisringförmige oder kreisringabschnittförmige Permanentmagnete eingesetzt werden. Dabei kann die Magnetkupplung neben einem oder mehreren Permanentmagneten auch ferromagnetische Werkstoffe umfassen, welche mit dem/den Magneten zusammenwirken. Ggf. kann die Anordnung neben der Magnetkupplung, bestehend aus einem oder mehreren Permanentmagneten, zusätzlich auch mechanische Mittel zum Ausrichten des Mittelstifts gegenüber dem Unterstempel bzw. des ersten Kupplungselements gegenüber dem zweiten Kupplungselement umfassen. Solche mechanischen Mittel können beispielsweise Erhebungen und/oder Vertiefungen umfassen. Mechanische Ausricht-Mittel beispielsweise in der Form eines Stifts machen insbesondere dann Sinn, wenn nur an einem Kupplungselement Magnete angeordnet sind, die mit am anderen Kupplungselement angordneten ferromagnetischen Werkstoffen zusammenarbeiten. In diesem Fall könnte beispielsweise auch der Hauptkörper -Hülse 21- oder zumindest die obere Stirnseite 22 des ersten Kupplungselements 20 aus einem ferromagnetischen Werkstoff gefertigt werden.

| | | | |
|---|---|---|---|
| 1. | Pulverpresse | 36. | federelastische Zungen |
| 2. | Oberplatte | 37. | radiale Schlitze |
| 3. | Matrizenplatte | 38. | Referenzmarken (Palette) |
| 4. | Unterplatte | 39. | Ausnehmung für Chip (Palette) |
| 5. | Fussplatte | 40. | Ringelement |
| | | 41. | Ringkammer (Pulveraufnahme) |
| 7. | Oberstempel | 42. | Dichtelement |
| 8. | Spannfutter (Oberstempel) | 44. | Feldlinien |
| 10. | Matrize | 45. | Drehrichtung |
| 11. | Spannfutter (Matrize) | | |
| 12. | Unterstempel | 47. | Innengewinde (Befestigungsmutter) |
| 13. | Palette (Unterstempel) | 48. | Schulter (Befestigungsmutter) |
| 14. | Spannfutter (Unterstempel) | | |
| 15. | Mittelstift | 50. | Aussengewinde (Spannzapfen) |
| 16. | Spannfutter (Mittelstift) | 51. | Zentriernuten |
| 17. | zylindrischer Fortsatz (Mittelstift) | 53. | Gewindebohrungen (Palette 13) |
| | | 54. | Nut für Robotergreifer |
| 20. | erstes Kupplungselement | 55. | Ausnehmung (Spannzapfen) |
| 21. | Hülse | 56. | Ausnehmung (Spannzapfen) |
| 22. | obere Stirnseite | 57. | Doppelpfeil Magnetfeld |
| 23. | Bohrungen | 58. | Doppelpfeil Drehrichtung |
| 24. | Magnete | 59. | Robotergreifer |
| 25. | radiale Schrauben | 60. | Winkelelement |
| 26. | Befestigungsmutter / 26a Kragen | 61. | Finger |
| 27. | Schlitze | | |
| 28. | Spannzapfen (Mittelstift) | | |
| 29. | zylindrischer Oberteil | | |
| 30. | zweites Kupplungselement | | |
| 31. | Durchgangsbohrung | | |
| 32. | untere Stirnseite | | |
| 33. | Magnete | | |
| 34. | radiale Fortsätze | | |
| 35. | Einkerbungen | | |

## Patentansprüche

1. Pulverpresse mit einem Oberstempel (7), einer Matrize (10), einem mittels einer Palette (13) in einem Unterstempel-Spannfutter (14) festspannbaren Unterstempel (12) sowie einem in einem Mittelstift-Spannfutter (16) festspannbaren Mittelstift (15), der sich in den Unterstempel (12) hinein erstreckt und/oder koaxial dazu angeordnet ist, und einer Anordnung, die eine Kupplung zum direkten oder indirekten Koppeln des Mittelstifts mit dem Unterstempel (12) umfasst, wobei der Mittelstift (15) in Relation zu dem Unterstempel (12) bewegbar ist, **dadurch gekennzeichnet, dass** die Kupplung als Magnetkupplung ausgebildet ist und zwei Kupplungselemente (20, 30) aufweist, wobei das erste Kupplungselement (20) mit dem Mittelstift (15) und das zweite Kupplungselement (30) mit dem Unterstempel (12) in Wirkverbindung bringbar ist.

2. Pulverpresse nach Anspruch 1, **dadurch gekennzeichnet, dass** die Anordnung eine den Unterstempel (12) tragende Palette (13) umfasst und das zweite Kupplungselement (30) mit der den Unterstempel tragenden Palette (13) verbindbar ist.

3. Pulverpresse nach einem der vorhergehenden Ansprüche, **dadurch gekennzeichnet, dass** die Magnetkupplung zumindest einen am einen Kupplungselement (20) angeordneten Permanentmagneten (24) und zumindest einen am anderen Kupplungselement (30) angeordneten Permanentmagneten (33) oder ferromagnetischen Werkstoff umfasst.

4. Pulverpresse nach Anspruch 3, **dadurch gekennzeichnet, dass** jedes der beiden Kupplungselemente (20, 30) mit mehreren Permanentmagneten (24, 33) versehen ist.

5. Pulverpresse nach Anspruch 3 oder 4, **dadurch gekennzeichnet, dass** die Magnetkupplung derart ausgebildet ist, dass durch den Permanentmagneten bzw. die Permanentmagnete (24, 33) beim Koppeln der beiden Kupplungselemente (20, 30) eine winkelgenaue Positionierung des ersten Kupplungselements (20) gegenüber dem zweiten Kupplungselement (30) bewirkt wird.

6. Pulverpresse nach einem der vorhergehenden Ansprüche, **dadurch gekennzeichnet, dass** das erste Kupplungslement (20) mit einer dem zweiten Kupplungslement (30) zugewandten Stirnseite (22) versehen ist, in welche zumindest ein Permanentmagnet (24) oder ein ferromagnetischer Werkstoff zur Bildung der einen Kupplungshälfte der Magnetkupplung eingelassen ist.

7. Pulverpresse nach Anspruch 6, **dadurch gekennzeichnet, dass** das zweite Kupplungselement (30) eine dem ersten Kupplungselement (20) zugewandte Stirnseite (32) aufweist, in welche zumindest ein Permanentmagnet (33) oder ein ferromagnetischer Werkstoff zur Bildung der anderen Kupplungshälfte der Magnetkupplung eingelassen ist.

8. Pulverpresse nach Anspruch 7, **dadurch gekennzeichnet, dass** in die Stirnseite (22, 32) des jeweiligen Kupplungselements (20, 30) mehrere Permanentmagnete (24, 33) eingelassen sind, wobei das eine Kupplungselement (20) Permanentmagnete (24a, 24b) mit unterschiedlich ausgerichteten Polen aufweist, welche derart auf die ebenfalls unterschiedlich ausgerichtete Pole aufweisenden Permanentmagnete (33a, 33b) des anderen Kupplungselements (30) abgestimmt sind, dass das erste Kupplungselement (20) unter der Wirkung der Feldlinien der Magnete (24a, 24b, 33a, 33b) selbsttätig in eine vorbestimmte Winkellage gegenüber dem zweiten Kupplungselement (30) drehbar ist.

9. Pulverpresse nach einem der vorhergehenden Ansprüche, **dadurch gekennzeichnet, dass** das erste Kupplungselement (20) in der Form einer den Mittelstift (15) abschnittweise umschliessenden Hülse (21) ausgebildet ist, und das zweite Kupplungselement (30) mit einer zentralen Bohrung (31) zum Durchführen des Mittelstifts (15) versehen ist.

10. Pulverpresse nach einem der vorhergehenden Ansprüche, **dadurch gekennzeichnet, dass** das erste und zweite Kupplungselement (20, 30) zur Hauptsache aus einem nichtmagnetischen Werkstoff gefertigt sind.

11. Pulverpresse nach einem der vorhergehenden Ansprüche, **dadurch gekennzeichnet, dass** die Anordnung zusätzlich mechanische Mittel zum Ausrichten des ersten Kupplungselements (20) gegenüber dem zweiten Kupplungselement (30) umfasst.

12. Pulverpresse nach einem der Ansprüche 2 bis 11, **dadurch gekennzeichnet, dass** das zweite Kupplungselement (30) mit radialen Fortsätzen (34) versehen ist, mittels welchen das zweite Kupplungselement (30) winkelgerecht in Ausnehmungen der den Unterstempel (12) tragenden Palette (13) positionierbar ist.

13. Pulverpresse nach einem der Ansprüche 2 bis 12, **dadurch gekennzeichnet, dass** das zweite Kupplungselement (30) federelastisch nachgiebige Zungen (36) aufweist, welche mit Rastnasen versehen sind, so dass das zweite Kupplungselement (30) klemmend in einer korrespondierenden Ringnut der den Unterstempel (12) tragenden Palette (13) fixierbar ist.

14. Pulverpresse nach einem der Ansprüche 2 bis 13, **dadurch gekennzeichnet, dass** die den Unterstempel (12) tragende Palette (13) mit zumindest einer Ausnehmung (54) und/oder Erhebung versehen ist, welche derart ausgebildet ist/sind, dass ein Robotergreifer (59) daran angreifen kann.

## Claims

1. A powder press with an upper punch (7), a die (10), a lower punch (12) which can be fixedly clamped, by means of a pallet (13) in a lower punch chuck (14) as well as a core rod (15) which can be fixedly clamped in a core rod chuck (16), which core rod extends into the lower punch (12) and/or is arranged coaxial thereto, and an assembly which comprises a coupling for directly or indirectly coupling the core rod to the lower punch (12), wherein the core rod (15) can be moved in relation to the lower punch (12), **characterised in that** the coupling is designed as a magnetic coupling and has two coupling elements (20, 30), wherein the first coupling element (20) is actively connected to the core rod (15) and the second coupling element (30) is actively connected to the lower punch (12).

2. The powder press according to claim 1, **characterised in that** the assembly comprises a pallet (13) carrying the lower punch (12) and the second coupling element (30) can be connected to the pallet (13) carrying the lower punch.

3. The powder press according to one of the preceding claims, **characterised in that** the magnetic coupling comprises at least one permanent magnet (24) arranged on one coupling element (20) and at least one permanent magnet (33) or ferromagnetic material arranged on the other coupling element (30).

4. The powder press according to claim 3, **characterised in that** each of the two coupling elements (20, 30) is provided with several permanent magnets (24, 33).

5. The powder press according to claim 3 or 4, **characterised in that** the magnetic coupling is designed such that, due to the permanent magnet(s) (24, 33), when coupling the two coupling elements (20, 30) the first coupling element (20) is positioned relative to the second coupling element (30) at a predetermined precise angle.

6. The powder press according to one of the preceding claims, **characterised in that** the first coupling element (20) is provided with an end (22) facing the second coupling element (30), in which end at least one permanent magnet (24) or a ferromagnetic material is engaged to form one coupling half of the magnetic coupling.

7. The powder press according to claim 6, **characterised in that** the second coupling element (30) comprises an end (32) facing the first coupling element (20), in which end at least one permanent magnet (33) or a ferromagnetic material is engaged to form the other coupling half of the magnetic coupling.

8. The powder press according to claim 7, **characterised in that** several permanent magnets (24, 33) are engaged in the end (22, 32) of each coupling element (20, 30), wherein the one coupling element (20) has diversely polarised permanent magnets (24a, 24b), which poles are matched to the permanent magnets (33a, 33b) of the other coupling element (30) including likewise diversely polarised poles, such that the first coupling element (20) can be rotated automatically into a predetermined angular position relative to the second coupling element (30) due to the effect of the field lines of magnets (24a, 24b, 33a, 33b).

9. The powder press according to one of the preceding claims, **characterised in that** the first coupling element (20) is designed in the form of a sleeve (21) surrounding portions of the core rod (15) and the second coupling element (30) is provided with a central through-hole (31) for the core rod (15).

10. The powder press according to one of the preceding claims, **characterised in that** the first and second coupling elements (20, 30) to the main axis are made of a non-magnetic material.

11. The powder press according to one of the preceding claims, **characterised in that** the assembly additionally comprises mechanical means for orienting the first coupling element (20) relative to the second coupling element (30).

12. The powder press according to one of claims 2 to 11, **characterised in that the** second coupling element (30) is provided with radial projections (34), by means of which the second coupling element (30) can be positioned correctly angled in recesses of the pallet (13) carrying the lower punch (12).

13. The powder press according to one of claims 2 to 12, **characterised in that** the second coupling element (30) comprises pliant tongues (36) which are provided with detents, with the result that the second coupling element (30) can be clamped fixedly in place in a corresponding angular groove of the pallet (13) carrying the lower punch (12).

14. The powder press according to one of claims 2 to 13, **characterised in that** the pallet (13) carrying the lower punch (12) is provided with at least one recess (54) and/or projection which is/are designed such that a robotic manipulator (59) can grip thereto.

## Revendications

1. Presse à poudre avec un poinçon supérieur (7), une matrice (10), un poinçon inférieur (12) pouvant être serré dans un mandrin de serrage de poinçon inférieur (14), ainsi qu'une tige centrale (15) pouvant être serrée dans un mandrin de tige centrale (16), tige centrale (15) qui s'étend jusque dans le poinçon inférieur (12) et/ou est disposé de manière coaxiale par rapport à celui-ci, et un ensemble qui comprend un couplage destiné à coupler la tige centrale de manière directe ou indirecte au poinçon inférieur (12), la tige centrale (15) étant mobile par rapport au poinçon inférieur (12), **caractérisée en ce que** le coupage est conçu comme un couplage magnétique et présente deux éléments de couplage (20, 30), le premier élément de couplage (20) pouvant être amené en liaison coopérante avec la tige centrale (15) et le second élément de couplage (30) pouvant être amené en liaison coopérante avec le poinçon inférieur (12),

2. Presse à poudre suivant la revendication 1, **caractérisée en ce que** l'ensemble comprend une palette (13) porteuse du poinçon inférieur (12) et **en ce que** le second élément de couplage (30) peut être relié à la palette (13) porteuse du poinçon inférieur (13).

3. Presse à poudre suivant une des revendications précédentes, **caractérisée en ce que** le couplage magnétique comprend au moins un aimant permanent (24) disposé sur l'un des éléments de couplage (20) et au moins un aimant permanent (33) disposé sur l'autre élément de couplage (30) ou un matériau ferromagnétique.

4. Presse à poudre suivant la revendication 3, **caractérisée en ce que** chacun des deux éléments de couplage (20, 30) est muni de plusieurs aimants magnétiques (24, 33).

5. Presse à poudre suivant la revendication 3 ou 4, **caractérisée en ce que** le couplage magnétique est conçu de telle sorte qu'un positionnement du premier élément de couplage (20) respectant les angles par rapport au second élément de couplage (30) est obtenu grâce à l'aimant permanent, à savoir aux aimants permanents (24, 33) lors du couplage des deux éléments de coulage (20, 30).

6. Presse à poudre suivant une des revendications précédentes, **caractérisée en ce que** le premier élément de couplage (20) est pourvu d'une face frontale (22) tournée vers le second élément de couplage (30), face frontale (22), dans laquelle est inséré au moins un aimant permanent (24) ou un matériau ferromagnétique pour la formation de l'une des moitiés du couplage magnétique.

7. Presse à poudre suivant la revendication 6, **caractérisée en ce que** le second élément de couplage (30) présente une face frontale (32) tournée vers le premier élément de couplage, face frontale (32), dans laquelle est inséré au moins un aimant permanent (33) ou un matériau ferromagnétique pour la formation de l'autre moitié du couplage magnétique.

8. Presse à poudre suivant la revendication 7, **caractérisée en ce que** plusieurs aimants permanents (24, 33) sont insérés dans la face frontale (22, 32) de l'élément de couplage respectif (20, 30), l'un des éléments de couplage (20) présentant des aimants permanents (24a, 24b) avec des pôles alignés différemment qui sont adaptés aux pôles également alignés différemment de l'autre élément de couplage (30), de telle sorte que le premier élément de couplage (20) peut tourner automatiquement sous l'effet des lignes de champ des aimants (24a, 24b, 33a, 33b) jusqu'à une position angulaire prédéterminée par rapport au second élément de couplage (30).

9. Presse à poudre suivant une des revendications précédentes, **caractérisée en ce que** le premier élément de couplage (20) est conçu en forme d'un manchon (21) qui entoure la tige centrale (15) par zones et **en ce que** le second élément de couplage (30) est pourvu d'un alésage central (31) pour le passage de la tige centrale (15).

10. Presse à poudre suivant une des revendications précédentes, **caractérisée en ce que** le premier et le second élément de couplage (20, 30) sont réalisés principalement dans un matériau non magnétique.

11. Presse à poudre suivant une des revendications précédentes, **caractérisée en ce que** l'ensemble comprend en plus des moyens mécaniques pour aligner le premier élément de couplage (20) par rapport au second élément de couplage (30).

12. Presse à poudre suivant les revendications 2 à 11, **caractérisée en ce que** le second élément de couplage (30) est muni de prolongements radiaux (34), au moyen desquels le second élément de couplage (30) peut être positionné en respectant les angles dans des évidements de la palette (13) porteuse du poinçon inférieur (12).

13. Presse à poudre suivant les revendications 2 à 12, **caractérisée en ce que** le second élément de couplage (30) présente des languettes élastiquement souples (36) qui sont pourvues d'ergots d'arrêt de manière que le second élément de couplage (30) peut être fixé par serrage dans une rainure annulaire correspondante de la palette (13) porteuse du poinçon inférieur.

14. Presse à poudre suivant une des revendications 2 à 13, **caractérisée en ce que** la palette (13) porteuse du poinçon inférieur (12) est pourvue d'au moins un évidement (54) et/ou d'un relief qui est/sont conçu/s de telle sorte qu'une pince de robot (59) peut le/les saisir.
